# EUROPEAN PATENT SPECIFICATION

(11) **EP 0 572 657 B1**
(45) Date of publication and mention of the grant of the patent: **05.08.1998**
(21) Application number: 93902753.8
(22) Date of filing: 23.12.1992
(51) Int. Cl.: G01P 15/09, G01P 15/00

(54) **MULTI-MODE ACCELEROMETER**
BESCHLEUNIGUNGSMESSER MIT MEHREREN SCHWINGUNGSTYPEN
ACCELEROMETRE MULTIMODE

(30) Priority: 23.12.1991 US 812603; 28.09.1992 US 952345
(43) Date of publication of application: 08.12.1993
(73) Proprietor: ELF ATOCHEM NORTH AMERICA, INC., Philadelphia Pennsylvania 19102-3222 (US)
(72) Inventor: SMITH, Peter, Randall, Sacramento, CA 95630 (US); HENRY, John, Christopher, Paoli, PA 19301 (US)
(74) Representative: Klunker . Schmitt-Nilson . Hirsch
(86) International application number: PCT/US92/11207
(87) International publication number: WO 93/13426

(56) References cited:
- EP-A- 0 399 680
- DE-A- 2 316 130
- DE-C- 747 008
- DE-U- 9 017 712
- GB-A- 1 601 547
- JP-A- 3 242 555
- JP-A- 3 242 556
- JP-A- 3 242 557
- JP-A- 3 259 750
- JP-A- 4 020 865
- US-A- 4 932 259
- US-A- 5 128 581

## Description

### BACKGROUND OF THE INVENTION

### Field of the Invention

The present invention relates to a miniature multi-mode accelerometer which responds to acceleration in several different transverse and angular directions. In particular, the present invention is directed to increasing the sensitivity, accuracy and compactness of such an accelerometer and is further directed to reducing the cost of its manufacture.

The multi-mode accelerometer described herein operates in one or more linear modes along X, Y and Z axes which are orthogonally disposed, i.e., in planes at right angles to one another, and also in angular or torsional modes abo-ut the X, Y and Z axes. The present accelerometer is operable in one or several of such modes and is especially useful on disk drives of notebook-size computers and on other shock-sensitive portable or hand-held equipment.

Notebook-size computers employ small-diameter hard disk drives for data storage, that is, the information is magnetically stored on closely spaced tracks of rotatable discs. In the event that the disk drive experiences shock during the read/write operation, an improper read or write to the disk may take place. Accelerometers are employed in accordance with the invention to detect the shock and initiate a response. A multi-mode accelerometer constructed according to the present invention initiates an interruption of the read/write operation in response to shock above a predetermined level in one or more of the modes previously described. In addition, the accelerometer signal may be used in a feedback loop to control the position of the read/write arm, such as to reverse or otherwise reposition the arm in the event of shock. Furthermore, the accuracy, dependability, low cost, and thumbnail size of the accelerometer herein described is well suited for advanced hard drive and notebook-size computer apparatus.

Although a multi-mode accelerometer is disclosed herein, it may be configured advantageously to respond solely to torsional mode acceleration. Such a single mode accelerometer which does not form part of the invention will be less expensive to manufacture, and the complexity and cost of electrical interfacing will also be reduced.

The construction of the disc drive shown and described in U.S. Patent No. 4,831,476, issued May 16, 1989 to P. J. Pisczak discloses apparatus of the type with which the present invention is operatively associated and has its principal utility in a preferred embodiment.

### Description of the Prior Art

The present invention is an improvement upon the accelerometers and transducers of the type disclosed by way of example in U.S. Patent No. 4,996,878 of John Kubler which issued on March 5, 1991 and in U.S. Patent No. 4,431,935 of B.F. Rider which issued on February 14, 1984.

The Kubler transducer employs two identical oscillating beams of piezoelectric material, separated electrically, and fixed by their respective mountings to a base for measuring linear and angular acceleration. Electrical contacts are attached to the upper and lower side of each beam, and lines are attached to the contacts for interconnecting the piezoelectrical elements and for taking off the signals generated. Unfortunately, the transducer of Kubler uses two beams which have unmatched electrical characteristics which, in actual practice, require compensating circuitry and adjustment. Such compensating circuitry is undesirable since it increases the cost and complexity of the accelerometer.

The Rider sensor structure is mounted on the object being monitored for rotation therewith, and it comprises a plurality of piezoelectric plates preferably arranged in a laminated structure. However, the Rider sensor structure is quite complicated, has unpredictable electrical characteristics, and is difficult to mount on an object for rotation therewith. A simplified and inexpensive accelerometer is thus desired.

JP-A-3-242556 discloses a linear accelerometer comprising two separate piezoelectric film transducers each having a first electrode on a first side of the piezoelectric film transducer and a second electrode on a second side of the piezoelectric film transducer. One of the two transducers serves as an acceleration measuring transducer and is provided with a weight serving as an inertia member compressing the piezoelectric film of this transducer in case of linear acceleration in a direction normal to the piezoelectric film of this transducer. The second serves as a compensation transducer and is for compensation of temperature influences.

EP-A-0 399 680 discloses an accelerometer being close to that known from JP-A-3-242556 but having the acceleration measuring transducer and the compensation transducer on an integrated piezoelectric film.

### SUMMARY OF THE INVENTION

The present invention seeks to avoid the deficiencies of Kubler's two oscillating beams that are electrically unmatched. It also seeks to avoid the deficiencies of Rider's multiple transducers laminated together in view of their unpredictable electrical characteristic and mounting difficulties on an object for rotation therewith. For these purposes, a first embodiment of the present invention employs one, centrally mounted piezoelectric member with a unitary, full length, common conductor on one surface of the piezoelectric member and separate electrodes on the other surface thereof to provide a multi-mode accelerometer which is capable of performing electrical differencing by itself and which may serve as both a linear and an angular accelerometer. In a second embodiment of the invention, two or more of such piezoelectric members are formed from a single piece of piezoelectric material for sensing acceleration in different angular directions, while in a third embodiment, a mass is placed on the conductor(s) on one side of a piezoelectric film to apply a compressive rather than a bending force for providing a multi-mode accelerometer which may also serve as a linear and an angular accelerometer.

The present invention thus relates to a multi-mode accelerometer for sensing the acceleration in at least one angular direction of movement of an object. Such an accelerometer in accordance with the first embodiment of the invention preferably comprises a substantially flat, elongated beam structure comprising a piezoelectric film transducer which produces electrical signals proportional to its deflection, a common electrode on a first side of the piezoelectric film transducer, and first and second electrodes on a second side of the piezoelectric film transducer which is opposite the first side. In accordance with the invention, the first and second electrodes are electrically isolated from each other and thus together with the common electrode form two piezoelectric sensing elements from a single piezoelectric film. A support structure is also provided for supporting the elongated beam structure at a mid-section thereof so that end portions of the elongated beam structure on either side of the mid-section may deflect in opposite directions in response to angular movement of the elongated beam structure in the sensed angular direction.

In preferred configurations of the first embodiment of the invention, the common electrode comprises a rigid conductive beam. The support structure may also comprise three conductive elements which respectively contact the common electrode and the first and second electrodes so as to form electrical contact therewith.and to support the beam structure with respect to the object.

Alternatively, the beam structure may comprise a nonconductive beam for supporting the piezoelectric film transducer and the common, first and second electrodes. In this configuration, the nonconductive beam may comprise a central notch through which the piezoelectric film transducer passes such that one end of the piezoelectric film transducer is on one side of the nonconductive beam and another end of the piezoelectric film transducer is on the other side of the nonconductive beam. To facilitate electrical connections, such an embodiment may further comprise tab portions on the first and second electrodes for insertion into a printed circuit board having slots for accepting the tabs.

Preferably, three of such accelerometers are provided along the X, Y and Z axes for sensing the angular acceleration of an object about the X, Y and Z axes.

In a second embodiment of the multi-mode accelerometer of the invention, the accelerometer senses the acceleration in at least first and second angular directions of movement of the object. Such an accelerometer in accordance with the invention preferably comprises a piezoelectric sensor comprising a thin conductive sheet laminated on one side thereof to a piezoelectric film transducer which produces electrical signals proportional to its deflection. The conductive sheet functions as a common electrode and as a structural support on a first side of the piezoelectric film transducer. First and second electrodes are also disposed on a second side of the piezoelectric film transducer which is opposite the first side, and the first and second electrodes are electrically isolated from each other so as to form with the common electrode two separate piezoelectric sensors using a single piezoelectric film.

Preferably, the piezoelectric transducer of the second embodiment has a first portion thereof which includes a first substantially flat, elongated beam structure which is supported at a mid-section thereof so as to deflect in opposite directions at end portions thereof on either side of the mid-section in response to angular movement of the first elongated beam structure in the first angular direction. In order to sense acceleration in a second angular direction, the piezoelectric transducer of the second embodiment further comprises a second portion thereof which includes a second substantially flat, elongated beam structure which is connected at a mid-section thereof to the object and has free ends on either side of the mid-section which are at respective angles to the object so as to deflect in opposite directions in response to angular movement of the second elongated beam structure in the second angular direction. A support structure is also provided for connecting the second elongated beam structure at the mid-section thereof to the object so as to allow deflection is the first and second angular directions in response to movement of the object.

In addition, the piezoelectric transducer of the second embodiment may have a third portion thereof which includes a third substantially flat, elongated beam structure which is supported at a mid-section thereof so as to deflect in opposite directions at end portions thereof on either side of the mid-section in response to angular movement of the third elongated beam structure in a third angular direction, thereby allowing measurement of angular acceleration about all of the coordinate axes.

In a third embodiment of the multi-mode accelerometer of the invention, the accelerometer comprises a substrate, a piezoelectric film transducer disposed on a surface of the substrate, the piezoelectric film transducer comprising a piezoelectric film for producing electrical signals proportional to its deflection, a common electrode on a first side of the piezoelectric film, and first and second electrodes on a second side of the piezoelectric film which is opposite the first side. The first and second electrodes are electrically isolated from each other so as to form two piezoelectric sensors from a single piezoelectric film.

However, unlike the first and second embodiments, the third embodiment further comprises a mass attached to a side of the piezoelectric film transducer opposite the substrate for imparting stress to the piezoelectric film during acceleration in at least one angular direction. In this embodiment, acceleration in the sensed angular direction is proportional to the stress applied to the piezoelectric film by the mass.

In a first configuration of the third embodiment, the mass comprises a first portion substantially centered over the first electrode and a second portion substantially centered over the second electrode so that it stress the piezoelectric film in response to angular acceleration in the sensed angular direction at a sensitivity functionally related to a distance between the first and second portions of the mass. Alternatively, the mass may be substantially centered over the first electrode so that it stresses the piezoelectric film in response only to linear acceleration of the mass.

The piezoelectric film transducer of the third embodiment may further comprise an insulator between the first and second electrodes and the mass, whereby the first side of the piezoelectric film and the common electrode are disposed adjacent the substrate. The output of the transducer is then obtained via an amplifier. In a first configuration, the first electrode is grounded and the electrical signals are applied to the amplifier via the second electrode. Alternatively, a differential amplifier may be connected at respective inputs thereof to the first and second electrodes.

As will be appreciated by those skilled in the art, since the accelerometer of the respective embodiments of the present invention utilizes a simple, continuous, piezoelectric film as the active element of the sensor, the deflecting portions are well matched, surely better matched than two separate piezoelectric films. Therefore, the present accelerometer does not require the matching or compensating circuitry of prior art accelerometers.

The sensor of the present invention preferably includes a housing for the sensor, with its mount secured in a stationary position on that housing. Unlike the Rider construction, the present housing is mounted, not for rotation with a rotating object, but it is fixedly mounted on a non-rotating object for monitoring the acceleration of that object in both linear and torsional modes. For example, the accelerometer of the invention is preferably mounted on a casing of a hard disk drive or other non-rotatable surface of a portable computer. Preferably, the sensor circuitry further includes a read/write interrupt device operatively associated with a data bus and a read/write disk, whereby upon receipt of signals at a predetermined level from the sensor, the interrupt device interrupts the transfer of data between the data bus and the read/write disk, with the result that read/write errors caused by shock to the computer are prevented. Alternatively, the signal may be employed to reverse or otherwise reposition the arm in the event of shock.

### BRIEF DESCRIPTION OF THE DRAWINGS

The objects and advantages of the invention will become more apparent and more readily appreciated to one of ordinary skill in the art from the following detailed description of the presently preferred exemplary embodiments of the invention taken in conjunction with the accompanying drawings, of which:

Figure 1 is a perspective view of a disk drive unit having the accelerometer of the present invention mounted on a read/write head, shown with its cover removed and with a portion of the housing broken away.

Figure 2 is a perspective view of an accelerometer showing the X, Y and Z axes in broken lines, and with arrows indicating the torsional mode.

Figure 3 is a block diagram showing the functional relationship of the accelerometer to the computer data bus, the magnetic storage media, and the read/write interrupt device.

Figure 4 is a perspective view of a notebook size portable computer employing the invention, with a portion of the computer casing broken away to show an internally positioned hard disk drive unit embodying the invention.

Figure 5 is an enlarged perspective view of a first embodiment of an accelerometer embodying the invention, its casing mounted on the surface of an object being monitored, and the cover of its casing removed to provide a view of the interior.

Figure 6 is an enlarged perspective view of a transducer element employed in the accelerometer of Figure 5.

Figures 7(a) and 7(b) illustrate the principle concepts embodied in a beam type piezoelectric rotational accelerometer mounted on an insulative beam (Figure 7(a)) or a conductive beam (Figure 7(b)) for use in the configuration illustrated in Figure 5.

Figure 8 is a schematic view of the transducer and its electrical circuitry, showing deflection and polarity of the transducer in the torsional mode.

Figure 9 is a schematic view of the transducer and its electrical circuitry, showing deflection and polarity of the transducer in the linear mode.

Figure 10 is an equivalent electrical circuit of the transducer element of Figure 6 when installed as in Figure 5;

Figure 11 is a view, partly perspective to show a three-axis mount for a multi-mode accelerometer and partly schematic to show associated electronic circuitry for an accelerometer for sensing angular acceleration about the X, Y and Z axes;

Figure 12 is a longitudinal cross-sectional view of a modified transducer of the type illustrated in Figure 5; and

Figure 13 is a longitudinal cross-sectional view of another modified transducer of the type illustrated in Figure

Figures 14(a) - 14(c) illustrate a structural design which does not fall under the scope of the present invention, which comprises a double cantilever beam formed from a single piece of piezoelectric material which is mounted at its center to a circuit board.

Figure 15 is a perspective view of a second embodiment of a piezoelectric sensor including a "winged" section responsive to shock in the X - Y and Y - Z planes.

Figures 16(a) - 16(c) respectively illustrate front, left-side and unfolded views of an embodiment of a piezoelectric sensor which is responsive to shock in any dimension.

Figures 17(a) and 17(b) respectively illustrate front and left-side views of another embodiment of a piezoelectric sensor which is responsive to shock in any dimension.

Figures 18(a) and 18(b) respectively illustrate front and top views of still another embodiment of a piezoelectric sensor which is responsive to shock in any dimension.

### DETAILED DESCRIPTION OF THE PREFERRED EMBODIMENT

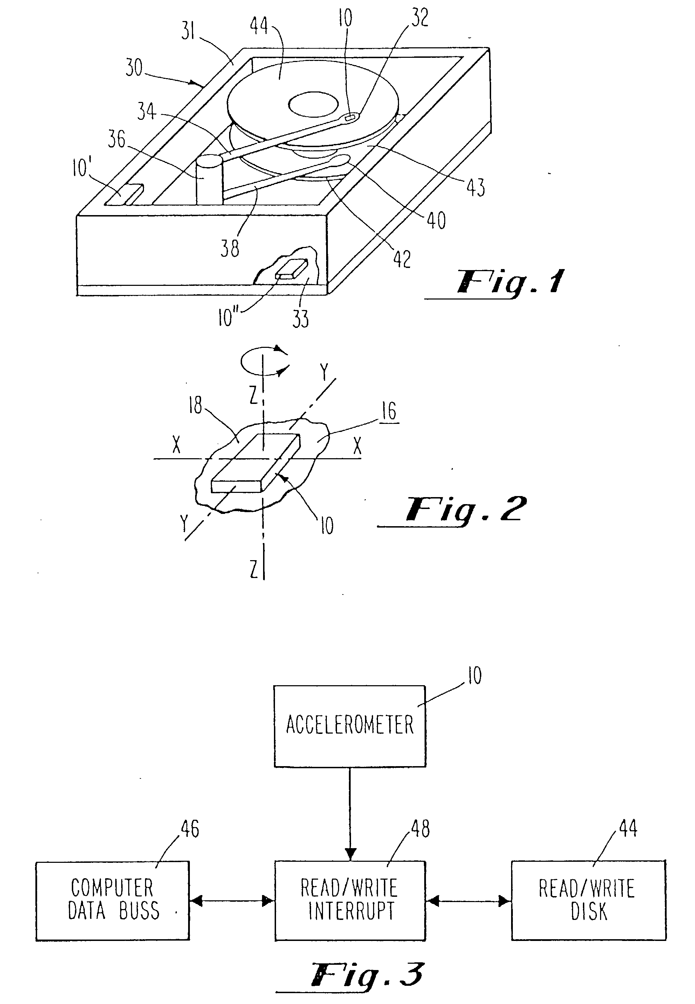

A multi-mode accelerometer in accordance with the presently preferred exemplary embodiments of the invention will be described below with reference to Figures 1-23. It will be appreciated by those of ordinary skill in the art that the description given herein with respect to those figures is for exemplary purposes only and is not intended in any way to limit the scope of the invention. For example, a preferred embodiment of the invention is described for use as a shock sensor in a notebook-size computer. Of course, the accelerometer of the invention may be used in many different products such as automobiles, seismic detectors and other rotating machinery for modal analysis and active vibration damping in many different configurations. Accordingly, all questions regarding the scope of the invention should be resolved by referring to the appended claims.

Figure 1 illustrates a hard disc drive 30 having an accelerometer 10 affixed to a read/write head 32. Alternatively, the accelerometer designated 10' may be rigidly mounted on the housing 31 of the drive 30 as shown or the accelerometer designated 10" may be affixed to the circuit board 33 within housing 31.

The read/write head 32 is installed at the free end of a read/write arm 34, movable in a limited arcuate range about an upright arm-positioning shaft 36. Also attached to the same shaft 36 is a locating arm 38 on the end of which is a position detector 40. Detector 40 cooperates with locating disk 42 at its locating surface 43 to signal the track and sector position of the read/write head 32 relative to the read/write discs 44. The accelerometer 10 is installed on head 32 for maximum responsiveness to head movement in the hard disk drive.

It is the function of the accelerometer 10 to respond to shock, such as to detect or measure the acceleration of the object on which it is mounted. The accelerometer 10 responds in one or more linear modes along orthogonal X, Y and Z axes shown in Figure 2, and torsionally about one or more of the axes as indicated by the arrows in Figure 2. The accelerometer 10 includes electronic circuitry which is described below.

The risk of read/write error due to shock increases with the downsizing of hard disk drives to fit into notebook-size computers. Mild shocks which previously could be tolerated now produce movement of the read/write head off the proper track to and beyond the adjacent track. This is because downsizing has reduced the distance between adjacent tracks of the disk, i.e., the magnetic storage media. It follows that the risk of read/write error due to shock in portable computers is exacerbated by downsizing of the disk, and the present invention addresses that concern.

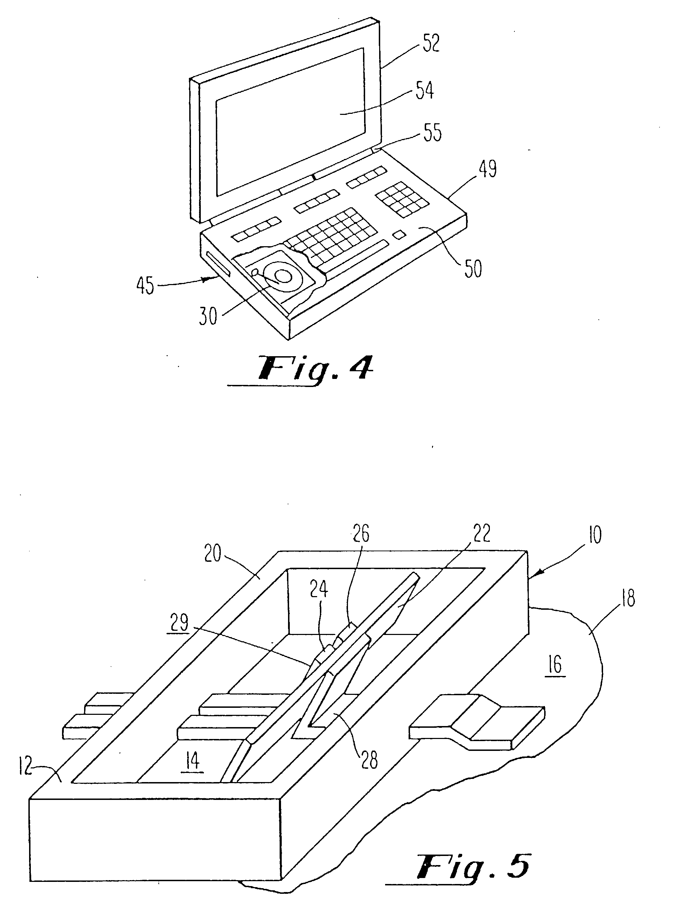

The hard disk drive 30 with an accelerometer 10 in accordance with the invention may be installed in a notebook-size portable computer 45 as shown in Figure 4. The accelerometer 10 is there operatively associated with the hard disk drive 30. As shown in Figure 3, data flows from computer buss 46 to magnetic storage media provided by read/write discs 44 under control of an electronic read/write interrupt device 48. In response to a signal from the accelerometer 10, the interrupt device 48 either allows or interrupts the flow of data between the buss 46 and the disc storage media 44, in either direction, or the signal may be used in a feedback loop to control repositioning of the head 32.

This mounting location is most sensitive in computer 45 for interruption of the read/write operation during shock to prevent read/write error. As shown in Figure 4, the computer 45 includes a case 49 with keyboard 50, video monitor 52 with screen 54, and hinge structure 55. A hard disk drive 30 having an accelerometer 10 is mounted in the case 49.

### Beam-type Piezoelectric Sensor Embodiments

Figure 5 illustrates a miniature, multi-mode accelerometer 10 embodying the invention. The accelerometer 10 is housed by a case 12 having a base 14 rigidly secured to the surface 16 of an object 18. A cover for the case 12 is removed and not shown in Figure 5, but it is in place in Figure 2. The case 12 further includes upright wall structure 20 surrounding an elongated transducer element 22. The element 22 is securely gripped and supported above the base 14 between a pair of fingers serving as conductive elements 24, 26 on one side of the element and another finger 28 serving as third conductive element on the other side thereof. The fingers 24, 26, 28 comprise a mount 29. An effective electrical connection is also made by the force of engagement between the mutually facing contact surfaces as a result of wedging the element 22 between the finger 28 and the pair of fingers 24, 26.

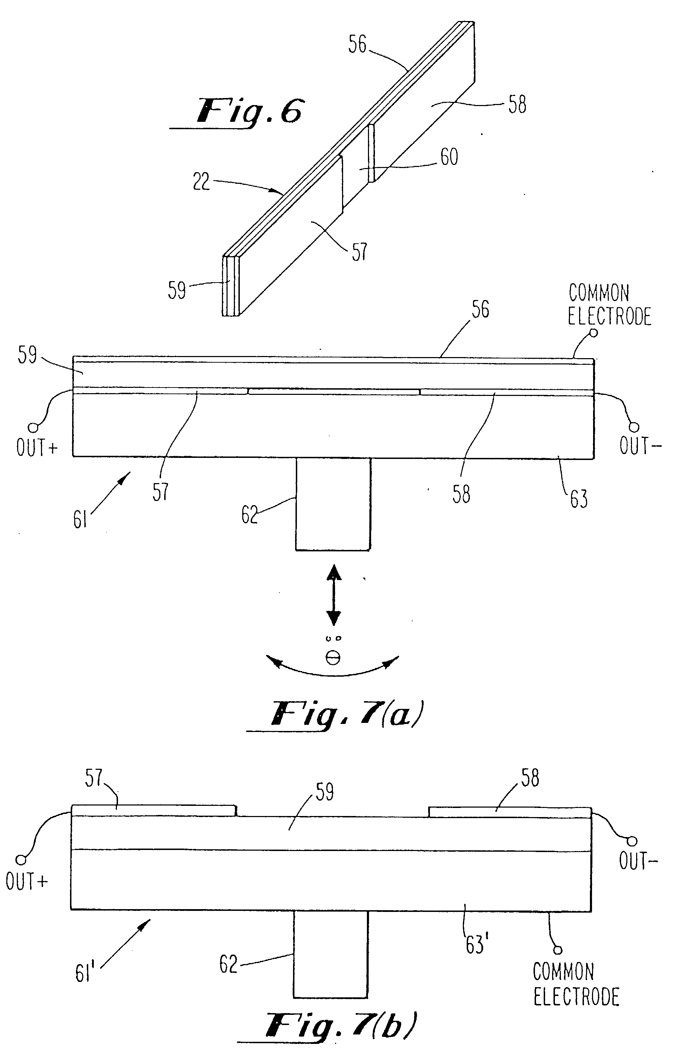

As shown in Figure 6, the beam-type accelerometer 10 is provided with a single piezoelectric transducer element 22. This element 22 preferably comprises a thin, elongated strip of beryllium copper providing the common conductor 56 laminated with adhesive to a single, similarly shaped sheet 59 of polarized polymeric piezoelectric material, preferably polyvinylidene fluoride (PVDF). As an alternative to sheet 59, a layer of polarized piezoelectric material such as VF₂VF₃ may be cast against the common conductor 56. The PVDF sheet 59 is procured with piezoelectric properties because in its manufacture it was stretched and subjected at elevated temperature to a large electric field to induce permanent piezoelectric activity.

As an alternative to a laminate of the PVDF sheet 59 and beryllium copper common conductor 56 as shown in Figure 6, a metallic deposit of conductive material on a thicker and therefore stiffer sheet 59 of PVDF material may be substituted. Preferably the deposited material forming conductor 56 is nickel, although silver, aluminum, gold and carbon are among other suitable materials.

Midway between the ends of the PVDF sheet 59, on the side opposite the common conductor 56, as shown in Figure 6, is an uncoated area 60 of sheet 59 which extends across the entire width of the element 22. On the same side as the uncoated area 60, and covering the remainder of this surface are metallic deposits serving as the output electrodes 57, 58. Each electrode 57, 58 extends from the uncoated area 60 to the associated free end of the transducer element 22.

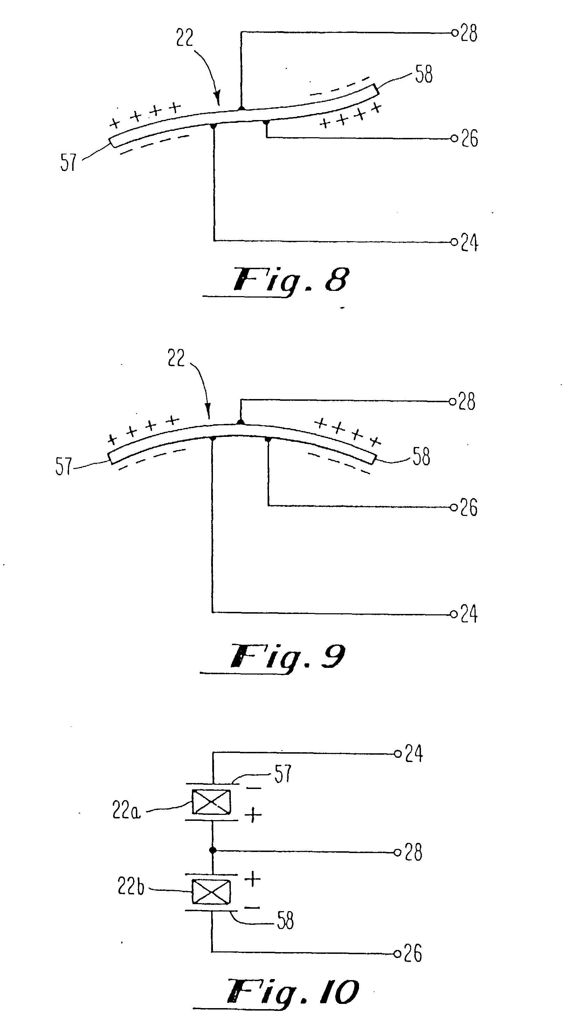

Fixedly supporting the transducer element 22 at a point intermediate its ends is the mount 29 whose conductive elements or fingers 24, 26 respectively contact the output electrodes 57, 58, and whose conductive element or finger 28 contacts the common conductor 56, as shown in Figure 5. Thus supported by mount 29, the free ends of the beam defined by transducer element 22 extend equidistantly in opposite directions from the mount 29. The free ends of the beam deflect in the same direction, as shown in Figure 9, in response to shock in the linear mode along the X or Z axis; and they deflect in opposite directions, as shown in Figure 8, in response to shock in the torsional mode about the Z axis.

The mount 29 employs the conductive elements or fingers 24, 26 and conductor 28 not only for making electrical contact or engagement with opposite sides of the transducer element 22, but also to clasp the transducer element 22 when engaging it on opposite sides thereof. Thus, two of the conductive elements of the mount 29, i.e., the fingers 24, 26, engage and provide leads to the output electrodes 57, 58, and the third of the conductive elements or fingers 28 engages and provides a lead to the common conductor 56.

With the transducer element 22 inclined at an angle of 45 degrees to the base 14 of the casing 12 and the underlying surface 18 of the object 10 on which it is mounted, the accelerometer 10 responds to linear shock in a plane containing the X axis, which plane is parallel to the surface of the base 14 of casing 12, and to the surface 18 of the object 16 being monitored. The accelerometer also responds to linear shock in the direction of the Z axis which is perpendicular to the X axis and preferably normal to the surface 18 and the base 14. An accelerometer of this construction is virtually insensitive to linear shock along the longitudinal axis of the transducer element 22 and sensitive to shock transverse to the longitudinal extent of the transducer element 22. It is also most sensitive in the torsional mode where the cross section of the element 22 offers the least resistance to bending. Although the Z axis is shown normal to the surface 18 in Figure 2, it will be most sensitive at the angle of inclination of the element 22.

The construction and arrangement is such that in response to linear acceleration there is common mode rejection because the two ends of the element 22 vibrate in unison, that is, both ends deflect in the same direction and produce the same voltage of the same polarity to the output electrodes 57, 58. On the other hand, in torsional mode the ends of the transducer element 22 move in opposite directions, out of phase, producing the same voltage of opposite polarity to the output electrodes 57, 58.

The principle concepts embodied in such a beam type, piezoelectric rotational accelerometer will be apparent to one skilled in the art upon reference to Figures 7(a) and 7(b). As known to those skilled in the art, a rotational accelerometer can be made by subtracting the signals from two perfectly matched linear accelerometers that are rotating about a common point. In the accelerometer in the embodiment of Figure 5, two linear accelerometers are actually designed using a single piece of piezoelectric polymer laminated to a rigid substrate (conductor) to form a cantilever beam structure, with the differencing actually done by the film electrode pattern itself. Then, when the beam structure is bent, in-plane stresses are applied to the piezoelectric film element causing a charge to be generated that is proportional to the amount of induced bend. Thus, when the beam structure is accelerated in a direction perpendicular to the plane of the beam, the beam will bend and produce a signal that is generally proportional to and of the proper sign for the direction of acceleration. The resulting structure also has very low sensitivity to transverse acceleration.

For example, as illustrated in Figure 7(a), the center support post or mount 62 of the piezoelectric sensor 61 is assumed to be mechanically coupled to the vibrating surface of interest, such as read/write head 32. If a purely linear acceleration is applied to the read/write head 32, (acceleration "a" in Figure 7), the resulting voltage between electrodes 57 and 58 is approximately zero. This is because both sides of the insulative beam 63 vibrate in unison about center support post 62 causing the piezoelectric film 59 to produce no net output due to a difference in film polarity. The common mode rejection ratio (CMRR), *i.e.,* how close the output is to zero, is controlled by how closely matched the insulative beam 63 is on either side of the center post 62. On the other hand, if rotational acceleration is applied to the piezoelectric sensor 61, each end of insulative beam 63 vibrates of phase causing a net output which is proportional to the angular acceleration level. As will be appreciated by one skilled in the art, a good CMRR is thus obtainable using the device of Figure 5 since differencing is done with one piece of piezoelectric film which need not be matched.

Alternatively, as illustrated in Figure 7(b), the insulative beam 63 of sensor 61 can be replaced by conductive beam 63' of sensor 61' which provides the common electrode to further simplify construction and signal output connections.

If output voltages are measured for the deflection conditions shown in Figure 8, it can be seen that a net potential difference in voltage V₂₄-V₂₆ is obtained in the torsional mode of the piezoelectric sensor of the invention. However, under the conditions of Figure 9, in the linear deflection mode, a potential in voltage V₂₄-V₂₆ does not exist because the terminals are at the same potential. Thus, a voltage V₂₄-V₂₆ is obtained only when torsional deflection occurs as shown in Figure 8. In the case of either linear or torsional deflection, voltage potentials exist at V₂₆-V₂₈, V₂₄-V₂₆, and V₂₄-V₂₈ in proportion to deflection, and these values are useful for determining displacement, velocity and acceleration.

The equivalent circuit of Figure 10 shows the now well known parts of Figures 8 and 9, except that the transducer element 22 is designated 22ₐ and 22_{b} for the parts thereof at the two free ends, with their polarities as indicated.

### Alternative beam-type piezoelectric sensor embodiments

Although a polymeric material is preferred for the element 22, a ceramic piezoelectric material may be employed for specific embodiments of the invention.

As another possible variation of the first embodiment of the invention, although casting of the piezoelectric layer onto conductor 56 is desired, this may be accomplished by laminating the layer onto the conductor 56.

The elongated transducer element 22 is desirably constructed with all non-conductive materials on its exposed surfaces, thus providing a beam movable in the bending mode having an exterior which is non-conductive.

The embodiment of Figure 5 has been shown with the element 22 mounted at a 45 degree angle to the base 14 of the casing 12, and at 45 degrees to the surface 18 of the object whose acceleration is being measured. In this context, it is the width or transverse extent of the long, flat element 22 that is so mounted. It is to be understood, however, that the element 22 may be mounted parallel to the base 14 and surface 18, or optionally at a right angle to the base 14 and surface 18. In these alternative mounted positions, the element 22 is most sensitive when bending about its narrowest cross section; therefore, the accelerometer of the present invention is well suited for use as a single mode, e.g., torsional mode, accelerometer when alternatively mounted as described.

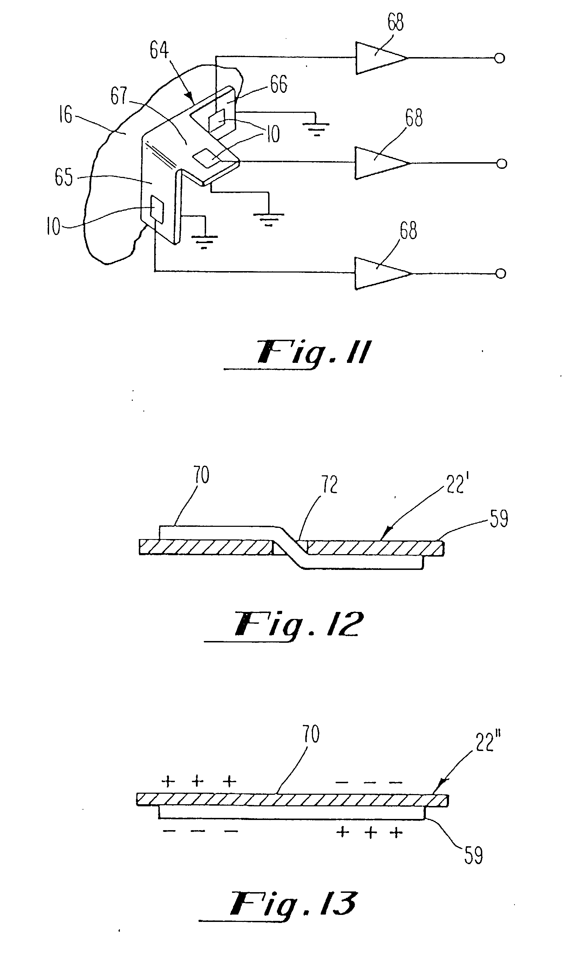

A configuration of the present invention for multi-mode shock sensing utilizes three single-mode accelerometers 10 respectively mounted on object surface 16, as shown in Figure 11, by means of mount 64. Mount 64 has three surfaces 65, 66, 67 which are respectively oriented orthogonally relative to the X, Y and Z axes. The three accelerometers 10 are independently mounted on the respective surfaces 65, 66, 67 for measuring acceleration. Each is equipped to measure acceleration in a selected mode and is operatively associated with an amplifier 68 and an amplifying circuit for the signal generated. The mode selected for measurement is likely to be torsional but it may measure in linear mode as well or instead. Whether used to measure one or more modes of acceleration on each of the three surfaces of mount 64, the three accelerometers 10, used in combination, comprise a multi-mode accelerometer in accordance with an alternative configuration of the invention.

Figure 12 illustrates a variation 22' of the element 22 shown in Figure 6. The element 22' of Figure 12 includes a strip 59 of metallized, piezoelectric polymer material, carried by a non-conductive beam 70. The beam 70 has a central notch 72 whereby one end of the strip 59 is on one end at one side of the beam 70, and extends through the notch 72 to extend to the other end at the other side of the beam 70. Adhesive or laminating processes may be employed to secure together broad surfaces of the strip 59 and beam 70. The beam 70 may be non-conductive throughout or of conductive material with a non-conductive coating.

Figure 13 illustrates another variation 22" of the element 22 shown in Figure 6. In Figure 6, element 22" comprises a beam 70 which is adhesively secured or laminated to one side of the metallized, piezoelectric polymer strip 59. Here, however, the opposite end portions of the strip 59 are oppositely spot-poled. More particularly, the element 22" of the beam structure includes a transducer strip 59 of continuous piezoelectric material poled at one end thereof with positive polarity along one side thereof and negative polarity on the opposite side thereof, and poled at the other end thereof with negative polarity along one side thereof and positive polarity on the opposite side thereof.

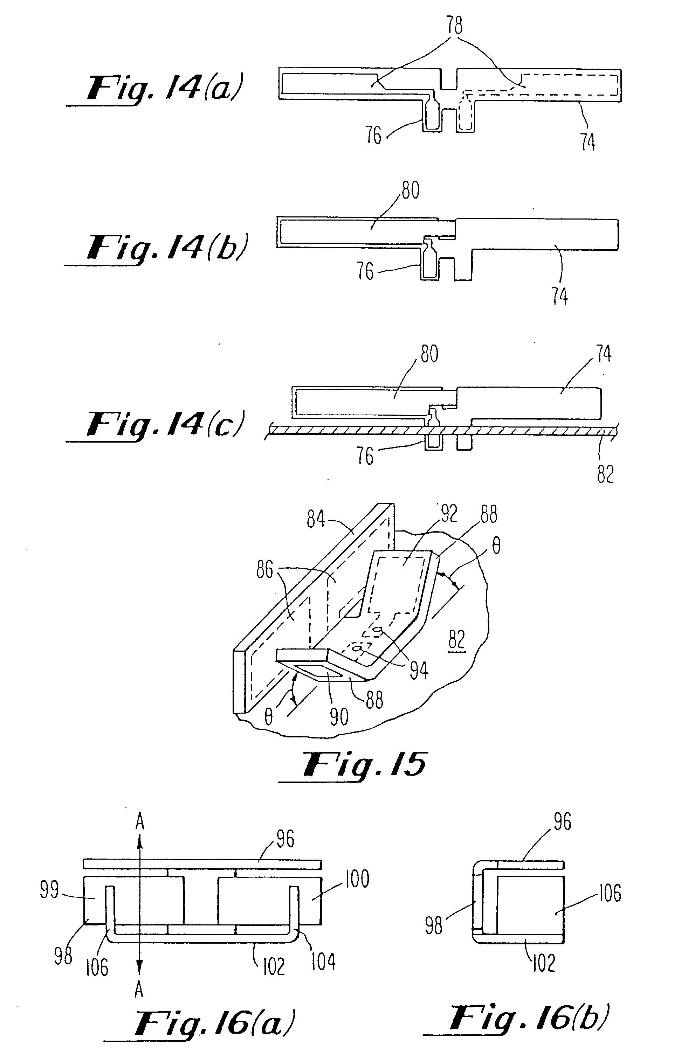

As known to those skilled in the art, an angular or rotary accelerometer may be formed from two linear accelerometers mounted on a common plane and spaced a distance apart. As noted above, by subtracting the signals from the two accelerometers, the amplitude of angular acceleration can be determined independent of any transverse or linear acceleration in any plane. Figures 14(a) - 14(c) illustrate an angular accelerometer which does not form part of the present invention, and which is formed from two cantilever beam acceleration sensors that are located and configured to detect any angular acceleration about the same axis on which the actuator arm rotates. In particular, as illustrated in Figure 14(a), the double cantilever beam can be formed from a single piece of beam 74 which is formed from a material such as standard PC board material. The beam is preferably supported in the center via, for example, pads 76 which connect the sensor to circuit traces on a circuit board 82 (Figure 14(c). The resulting structure has a left beam and a right beam including metal electrodes 78 on its surface and a single piece of piezoelectric film 80 which is cut and mounted in such a way that it is laminated to the front side of the left beam and the back side of the right beam (Figure 14(b)) in the manner described above with respect to Figure 12.

The structure of Figures 14(a) - 14(c) senses angular acceleration about an axis in the plane of the beams 74 and perpendicular to the length of the beams 74. When accelerated clockwise about this axis, the left beam and the right beam both bend counter-clockwise. This causes the piezoelectric film on each beam to produce signals of the same polarity, which add to produce an output signal. On the other hand, when the acceleration is counter-clockwise, the same thing happens except that the polarity of the signals is reversed. In addition, when the sensor of Figures 14(a) - (c) is subjected to linear acceleration that is in the plane of the beams, there is no beam bending and no electrical output signal. Finally, when the sensor is subjected to linear acceleration that is perpendicular to the beams, the left beam bends counter-clockwise and the right beam bends clockwise. The piezoelectric film 80 in each beam thus produces equal electrical signals but of opposite polarity, with a resultant output signal of zero.

Figure 15 is a perspective view of a second presently preferred embodiment of the invention whereby the cantilever beam sensor further includes a "winged" portion for sensing acceleration in the X-Y and Y-Z planes as well as the X-Z plane. As illustrated, the sensor of Figure 15 includes the cantilever beam portion 84 with electrodes 86 which connect to circuit traces on circuit board 82. Circuit board 82 may then, in turn, be mounted on a read/write head 32 and the like for measuring mechanical shock sensations. As shown, the "winged" portion of the sensor includes a base which is substantially perpendicular to the cantilever beam 84 and mounted at 94 to the circuit board 82. "Winged" portions 88 are inclined at respective angles θ and φ (preferably θ=φ=45°) to the circuit board 82 and include electrodes 90 and 92 which are preferably connected to the circuit traces at 94. In order to operate, the cantilever beam 84 and "winged" portions 88 are laminated with a unitary piezoelectric material which outputs electrical signals in response to acceleration in at least 4 of the 6 possible degrees of freedom.

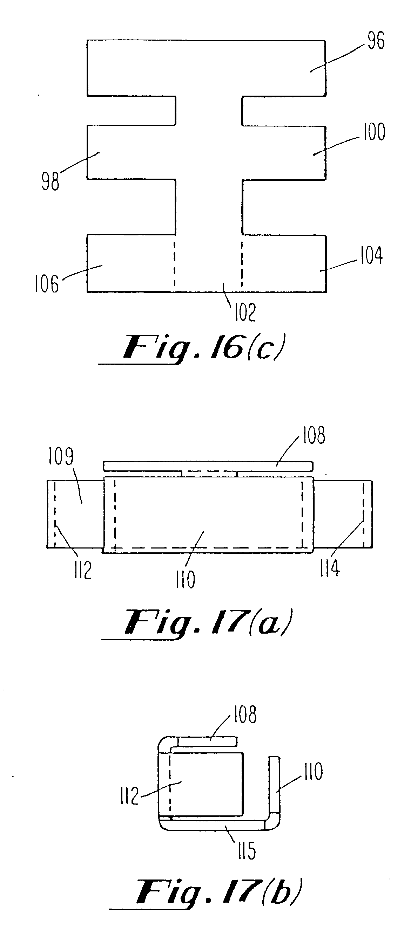

Figures 16(a) - 16(c) respectively illustrate front, left-side and unfolded views of an embodiment of a piezoelectric sensor which is responsive to shock for all 6 degrees of freedom. In particular, the sensor of Figure 16 is formed by bending a laminate of a piezoelectric material and a conductive electrode as shown in Figure 16(c) along the dotted fold lines to form the sensor shape illustrated in Figures 16(a) and 16(b). As shown in Figures 16(a) and 16(b), the cantilever beam 96 is folded substantially perpendicularly to another cantilever beam 98 having left beam 99 and right beam 100, which is, in turn, folded substantially perpendicularly to cantilever beam 102 having "winged" portions 104 and 106 which are substantially perpendicular to all of the cantilever beams. The resulting sensor is then mounted to a circuit board at the center of cantilever beam 102 so that acceleration in the 3 rotational and translational directions may be sensed.

Figures 17(a) and 17(b) respectively illustrate front and left-side views of another embodiment of a piezoelectric sensor which is responsive to shock for all 6 degrees of freedom. As in the embodiment of Figure 16, a piezoelectric material is laminated to a conductive material in the desired shape, and the resulting material is folded to form cantilever beams 108, 109 and 110 with "winged" sections 112 and 114. The resulting structure is then connected at 115 to circuit traces as indicated in Figure 17(b).

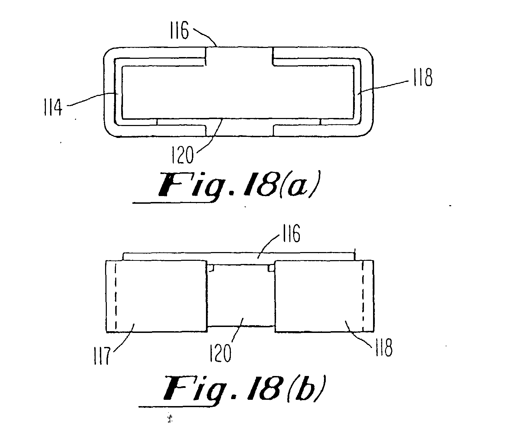

Figures 18(a) and 18(b) respectively illustrate front and top views of still another embodiment of a piezoelectric sensor which is responsive to shock for all 6 degrees of freedom. This embodiment includes cantilever beams 116 and 120 with modified "winged" portions 117 and 118 for sensing angular acceleration in the X-Y and Y-Z planes. As in the above embodiments, the piezoelectric material may be laminated or coated on either side of a conductive metal beam which is bent as indicated. Of course, many other similar configurations within the teachings of the invention will become apparent to those skilled in the art.

Although exemplary embodiments of the invention have been described in detail above, those skilled in the art will readily appreciate that many additional modifications are possible in the exemplary embodiments without materially departing from the novel teachings and advantages of the invention. Accordingly, all such modifications are intended to be included within the scope of this invention as defined in the following claims.

## Claims

1. A multi-mode accelerometer (10) for sensing the acceleration in both angular and linear directions of movement of an object (32), comprising:
a) a substantially flat, elongated one-piece beam structure comprising:
aa) a one-piece piezoelectric film transducer (22) which produces electrical signals proportional to its deflection,
ab) a one-piece common electrode (56) on a first side of said piezoelectric film transducer (22), and
ac) first and second electrodes (57, 58) on a second side of said piezoelectric film transducer (22) which is opposite said first side;
ad) said first and second electrodes (57, 58) being electrically isolated from each other; and
b) a support structure (29, 24, 26, 28) for supporting said elongated beam structure at a mid-section thereof, whereby end portions of said elongated beam structure on either side of said mid-section deflect in opposite directions in response to said angular movement of said elongated beam structure, and in the same direction in response to said linear movement of said elongated beam structure.

2. An accelerometer (10) according to claim 1, characterized in that said common electrode (56) comprises a rigid conductive beam.

3. An accelerometer (10) according to claim 2, characterized in that said support structure (29) comprises three conductive elements (24, 26, 28) which respectively contact said common electrode (56) and said first and second electrodes (57, 58) so as to form electrical contact therewith and to support said beam structure with respect to said object (32).

4. An accelerometer (10) according to claim 1, characterized in that said beam structure further comprises a nonconductive beam for supporting said piezoelectric film transducer (22) and said common, first and second electrodes (56, 57, 58).

5. An accelerometer (10) according to claim 4, characterized in that said nonconductive beam (70) comprises a central notch through (72) which said piezoelectric film transducer (59) passes such that one end of said piezoelectric film transducer is on one side of said nonconductive beam (70) and another end of said piezoelectric film transducer is on another side of said nonconductive beam (70).

6. An accelerometer (10) according to claim 5, characterized in that said first and second electrodes (57, 58) have tab portions and said support structure includes a printed circuit board having slots for accepting said tabs.

7. An accelerometer (10) according to claim 4, characterized in that said piezoelectric film transducer is spot poled in opposite polarities at opposite end portions thereof.

8. An accelerometer (10) according to claim 1, characterized in that said object is a read/write head of a computer disk drive (32) and said electrical signals provide a read/write interrupt to said computer disk drive when acceleration above a predetermined threshold in said at least one angular direction of movement is sensed.

9. A multi-mode accelerometer arrangement for sensing the acceleration of an object along X, Y and Z axes comprising an accelerometer according to any of claims 1 to 8 for each of said axes.

10. An accelerometer (10) according to claim 9, characterized in that said object (32) is a read/write head of a computer disk drive and said electrical signals provide a read/write interrupt to said computer disk drive when acceleration above a predetermined threshold along at least one of said X, Y and Z axes is sensed.

11. A multi-mode accelerometer (10) for sensing the acceleration in at least first and second angular directions of movement of an object (82), the piezoelectric transducer of which comprises :
a) a first portion which includes a first substantially flat, elongated beam structure according to any of claims 1 to 10 which is supported at a mid-section thereof so as to deflect in opposite directions at end portions thereof on either side of said mid-section in response to angular movement of said first elongated beam structure in said first angular direction and
b) a second portion which includes a second substantially flat, elongated beam structure which is connected at a mid-section thereof to said object (82) and has free ends (88) on either side of said mid-section which are at respective angles Θ to said object (82) so as to deflect in opposite directions in response to angular movement of said second elongated beam structure in said second angular direction;
and
c) a support structure for connecting said second elongated beam structure at said mid-section thereof to said object (82) so as to allow deflection in said first and second angular directions in response to movement of said object (32).

12. An accelerometer (10) according to claim 11, characterized in that said piezoelectric transducer (22) has a third portion thereof which includes a third substantially flat, elongated beam structure which is supported at a mid-section thereof so as to deflect in opposite directions at end portions thereof on either side of said mid-section in response to angular movement of said third elongated beam structure in a third angular direction.

13. An accelerometer (10) according to claim 11, characterized in that said object (32) is a read/write head of a computer disk drive and said electrical signals provide a read/write interrupt to said computer disk drive when acceleration above a predetermined threshold in at least one of said first and second angular directions of movement is sensed.

## Patentansprüche

1. Mehrmoden-Beschleunigungsmesser (10) zum Erfassen der Beschleunigung sowohl in Winkel- als auch in linearer Bewegungsrichtung eines Objekts (32), welcher aufweist:
a) eine im wesentlichen flache, langgestreckte einstückige Balkenstruktur mit:
aa) einem einstückigen piezoelektrischen Schichtmeßwandler (22), der elektrische Signale erzeugt, die proportional zu seiner Durchbiegung sind;
ab) einer einstückigen gemeinsamen Elektrode (56) auf einer ersten Seite des piezoelektrischen Schichtmeßwandlers (22); und
ac) ersten und zweiten Elektroden (57, 58) auf einer zweiten Seite des piezoelektrischen Schichtmeßwandlers (22), die der ersten Seite gegenüberliegt;
ad) wobei die ersten und zweiten Elektroden (57, 58) elektrisch gegeneinander isoliert sind; und
b) eine Trägerstruktur (29, 24, 26, 28) zum Unterstützen der langgestreckten Balkenstruktur in ihrem Mittelabschnitt, wodurch sich Endabschnitte der langgestreckten Balkenstruktur auf jeder Seite des Mittelabschnitts als Reaktion auf die Winkelbewegung der langgestreckten Balkenstruktur in entgegengesetzten Richtungen durchbiegen und als Reaktion auf die Linearbewegung der langgestreckten Balkenstruktur in der gleichen Richtung durchbiegen.

2. Beschleunigungsmesser (10) nach Anspruch 1, dadurch gekennzeichnet, daß die gemeinsame Elektrode (56) einen starren leitfähigen Balken aufweist.

3. Beschleunigungsmesser (10) nach Anspruch 2, dadurch gekennzeichnet, daß die Trägerstruktur (29) drei leitfähige Elemente (24, 26, 28) aufweist, welche die gemeinsame Elektrode (56), die erste bzw. die zweite Elektrode (57, 58) berühren, um einen elektrischen Kontakt damit herzustellen und die Balkenstruktur bezüglich des Objekts (32) zu unterstützen.

4. Beschleunigungsmesser (10) nach Anspruch 1, dadurch gekennzeichnet, daß die Balkenstruktur ferner einen nichtleitenden Balken zum Unterstützen des piezoelektrischen Schichtmeßwandlers (22) und der gemeinsamen, der ersten und der zweiten Elektrode (56, 57, 58) aufweist.

5. Beschleunigungsmesser (10) nach Anspruch 4, dadurch gekennzeichnet, daß der nichtleitende Balken (70) einen zentralen Einschnitt (72) aufweist, durch den der piezoelektrische Schichtmeßwandler (59) hindurchgeht, so daß sich ein Ende des piezoelektrischen Schichtmeßwandlers auf einer Seite des nichtleitenden Balkens (70) und ein anderes Ende des piezoelektrischen Schichtmeßwandlers auf einer anderen Seite des nichtleitenden Balkens (70) befindet.

6. Beschleunigungsmesser (10) nach Anspruch 5, dadurch gekennzeichnet, daß die ersten und zweiten Elektroden (57, 58) Kontaktfahnenabschnitte aufweisen und die Trägerstruktur eine Leiterplatte mit Schlitzen zur Aufnahme der Kontaktfahnen aufweist.

7. Beschleunigungsmesser (10) nach Anspruch 4, dadurch gekennzeichnet, daß der piezoelektrische Schichtmeßwandler an seinen einander entgegengesetzten Endabschnitten in entgegengesetzten Polaritäten punktgepolt ist.

8. Beschleunigungsmesser (10) nach Anspruch 1, dadurch gekennzeichnet, daß das Objekt ein Lese-Schreib-Kopf eines Computer-Plattenlaufwerks (32) ist und daß die elektrischen Signale ein Lese-Schreib-Interrupt für das Computer-Plattenlaufwerk liefern, wenn in der mindestens einen Winkelbewegungsrichtung eine Beschleunigung oberhalb eines vorgegebenen Schwellwerts erfaßt wird.

9. Mehrmoden-Beschleunigungsmesser-Anordnung (10) zum Erfassen der Beschleunigung eines Objekts in Richtung von X-, Y- und Z-Achsen, die für jede der Achsen einen Beschleunigungsmesser nach einem der Ansprüche 1 bis 8 aufweist.

10. Beschleunigungsmesser (10) nach Anspruch 9, dadurch gekennzeichnet, daß das Objekt (32) ein Lese-Schreib-Kopf eines Computer-Plattenlaufwerks ist und daß die elektrischen Signale ein Lese-Schreib-Interrupt für das Computer-Plattenlaufwerk liefern, wenn in Richtung mindestens einer der Achsen X, Y und Z eine Beschleunigung oberhalb eines vorgegebenen Schwellwerts erfaßt wird.

11. Mehrmoden-Beschleunigungsmesser (10) zum Erfassen der Beschleunigung in mindestens einer ersten und zweiten Winkelbewegungsrichtung eines Objekts (82), dessen piezoelektrischer Meßwandler aufweist:
a) einen ersten Abschnitt, der eine erste im wesentlichen flache, langgestreckte Balkenstruktur nach einem der Ansprüche 1 bis 10 aufweist, die in ihrem Mittelabschnitt unterstützt wird, so daß sie sich an ihren Endabschnitten auf jeder Seite des Mittelabschnitts als Reaktion auf die Winkelbewegung der ersten langgestreckten Balkenstruktur in einer ersten Winkelrichtung in entgegengesetzten Richtungen durchbiegt, und
b) einen zweiten Abschnitt, der eine zweite im wesentlichen flache, langgestreckte Balkenstruktur aufweist, die an ihrem Mittelabschnitt mit dem Objekt (82) verbunden ist und auf jeder Seite des Mittelabschnitts freie Enden (88) aufweist, die in entsprechenden Winkeln (θ) zu dem Objekt (82) stehen, um sich als Reaktion auf eine Winkelbewegung der zweiten langgestreckten Balkenstruktur in die zweite Winkelrichtung in entgegengesetzten Richtungen zu durchbiegen; und
c) eine Trägerstruktur, um die zweite langgestreckte Balkenstruktur an ihrem Mittelabschnitt mit dem Objekt (82) zu verbinden und als Reaktion auf eine Bewegung des Objekts (82) eine Durchbiegung in den ersten und zweiten Winkelrichtungen zu ermöglichen.

12. Beschleunigungsmesser (10) nach Anspruch 11, dadurch gekennzeichnet, daß der piezoelektrische Meßwandler (22) einen dritten Abschnitt aufweist, der eine dritte im wesentlichen flache, langgestreckte Balkenstruktur einschließt, die an ihrem Mittelabschnitt unterstützt wird, um sich als Reaktion auf eine Winkel bewegung der dritten langgestreckten Balkenstruktur in einer dritten Winkelrichtung an ihren Endabschnitten auf jeder Seite des Mittelabschnitts in entgegengesetzten Richtungen zu durchbiegen.

13. Beschleunigungsmesser (10) nach Anspruch 11, dadurch gekennzeichnet, daß das Objekt (82) ein Lese-Schreib-Kopf einer Computer-Plattenlaufwerks ist und daß die elektrischen Signale ein Lese-Schreib-Interrupt für das Computer-Plattenlaufwerk liefern, wenn in mindestens einer der ersten und zweiten Winkelbewegungsrichtungen eine Beschleunigung oberhalb eines vorgegebenen Schwellwerts erfaßt wird.

## Revendications

1. Accéléromètre multimode (10) pour détecter l'accélération suivant à la fois des directions angulaires et linéaires de déplacement d'un objet (32), comprenant:
a) une structure de poutre monopièce allongée sensiblement plane comprenant:
aa) un transducteur à film piézo-électrique monopièce (22) qui produit des signaux électriques proportionnels à sa flexion;
ab) une électrode commune monopièce (56) sur un premier côté dudit transducteur à film piézo-électrique (22);
ac) des première et seconde électrodes (57, 58) sur un second côté dudit transducteur à film piézo-électrique (22) qui est opposé audit premier côté; et
ad) lesdites première et seconde électrodes (57, 58) étant isolées électriquement l'une de l'autre; et
b) une structure de support (29, 24, 26, 28) pour supporter ladite structure de poutre allongée au niveau de sa section intermédiaire et ainsi, des parties d'extrémité de ladite structure de poutre allongée sur l'un et l'autre côtés de ladite section intermédiaire fléchissent suivant des sens opposés en réponse audit déplacement angulaire de ladite structure de poutre allongée et suivant le même sens en réponse audit déplacement linéaire de ladite structure de poutre allongée.

2. Accéléromètre (10) selon la revendication 1, caractérisé en ce que ladite électrode commune (56) comprend une poutre conductrice rigide.

3. Accéléromètre (10) selon la revendication 2, caractérisé en ce que ladite structure de support (29) comprend trois éléments conducteurs (24, 26, 28) qui sont respectivement en contact avec ladite électrode commune (56) et avec lesdites première et seconde électrodes (57, 58) de manière à réaliser un contact électrique avec et à supporter ladite structure de poutre par rapport audit objet (32).

4. Accéléromètre (10) selon la revendication 1, caractérisé en ce que ladite structure de poutre comprend en outre une poutre non conductrice pour supporter ledit transducteur à film piézo-électrique (22) et lesdites électrodes (56, 57, 58) que sont ladite électrode commune et lesdites première et seconde électrodes.

5. Accéléromètre (10) selon la revendication 4, caractérisé en ce que ladite poutre non conductrice (70) comprend une encoche centrale (72) au travers de laquelle ledit transducteur à film piézo-électrique (59) passe de telle sorte qu'une extrémité dudit transducteur à film piézo-électrique soit sur un côté de ladite poutre non conductrice (70) et qu'une autre extrémité dudit transducteur à film piézo-électrique soit sur un autre côté de ladite poutre non conductrice (70).

6. Accéléromètre (10) selon la revendication 5, caractérisé en ce que lesdites première et seconde électrodes (57, 58) comportent des parties de patte et ladite structure de support inclut une carte de circuit imprimé comportant des fentes pour accepter lesdites pattes.

7. Accéléromètre (10) selon la revendication 4, caractérisé en ce que ledit transducteur à film piézo-électrique est polarisé ponctuellement selon des polarités opposées au niveau de ses parties d'extrémité opposées.

8. Accéléromètre (10) selon la revendication 1, caractérisé en ce que ledit objet est une tête de lecture/écriture d'une unité de disque d'ordinateur (32) et en ce que lesdits signaux électriques appliquent une interruption de lecture/écriture sur ladite unité de disque d'ordinateur lorsqu'une accélération au-dessus d'un seuil prédéterminé suivant ladite au moins une direction angulaire de déplacement est détectée.

9. Agencement d'accéléromètre multimode (10) pour détecter l'accélération d'un objet suivant des axes X, Y et Z, comprenant un accéléromètre selon l'une quelconque des revendications 1 à 8 pour chacun desdits axes.

10. Accéléromètre (10) selon la revendication 9, caractérisé en ce que ledit objet (32) est une tête de lecture/écriture d'une unité de disque d'ordinateur et en ce que lesdits signaux électriques appliquent une interruption de lecture/écriture sur ladite unité de disque d'ordinateur lorsqu'une accélération au-dessus d'un seuil prédéterminé suivant au moins l'un desdits axes X, Y et Z est détectée.

11. Accéléromètre multimode (10) pour détecter l'accélération suivant au moins des première et seconde directions angulaires de déplacement d'un objet (82), dont le transducteur piézo-électrique comprend:
a) une première partie qui inclut une première structure de poutre allongée sensiblement plane selon l'une quelconque des revendications 1 à 10 qui est supportée au niveau de sa section intermédiaire de manière à fléchir suivant des sens opposés au niveau de ses parties d'extrémité sur l'un et l'autre côtés de ladite section intermédiaire en réponse à un déplacement angulaire de ladite première structure de poutre allongée suivant ladite première direction angulaire; et
b) une seconde partie qui inclut une seconde structure de poutre allongée sensiblement plane qui est connectée au niveau de sa section intermédiaire audit objet (82) et qui comporte des extrémités libres (88) sur l'un et l'autre côtés de ladite section intermédiaire qui sont selon des angles respectifs (θ) par rapport audit objet (82) de manière à fléchir suivant des sens opposés en réponse à un déplacement angulaire de ladite seconde structure de poutre allongée suivant ladite seconde direction angulaire; et
c) une structure de support pour connecter ladite seconde structure de poutre allongée au niveau de sa dite section intermédiaire audit objet (82) de manière à permettre une flexion suivant lesdites première et seconde directions angulaires en réponse à un déplacement dudit objet (32).

12. Accéléromètre (10) selon la revendication 11, caractérisé en ce que ledit transducteur piézo-électrique (22) a sa troisième partie qui inclut une troisième structure de poutre allongée sensiblement plane qui est supportée au niveau de sa section intermédiaire de manière à fléchir suivant des sens opposés au niveau de ses parties d'extrémité sur l'un et l'autre côtés de ladite section intermédiaire en réponse à un déplacement angulaire de ladite troisième structure de poutre allongée suivant une troisième direction angulaire.

13. Accéléromètre (10) selon la revendication 11, caractérisé en ce que ledit objet (32) est une tête de lecture/écriture d'une unité de disque d'ordinateur et en ce que lesdits signaux électriques appliquent une interruption de lecture/écriture sur ladite unité de disque d'ordinateur lorsqu'une accélération au-dessus d'un seuil prédéterminé suivant au moins l'une desdites première et seconde directions angulaires de déplacement est détectée.
